# EUROPÄISCHE PATENTSCHRIFT

(11) **EP 1 382 872 B1**
(45) Veröffentlichungstag und Bekanntmachung des Hinweises auf die Patenterteilung: **17.06.2020**
(21) Anmeldenummer: 02015850.7
(22) Anmeldetag: 16.07.2002
(51) Int. Cl.: F16D 13/64

(54) **Mitnehmereinheit für Lamellenkupplungssysteme**
Driving disk for multi-plate friction clutch
Plateau d'entraînement pour embrayage multi-disques

(43) Veröffentlichungstag der Anmeldung: 21.01.2004
(73) Patentinhaber: BorgWarner, Inc., Auburn Hills, MI 48326-2872 (US)
(72) Erfinder: Schmidt, Thomas, 76870 Kandel (DE); Günter, Frank, Dr., 76228 Karlsruhe (DE); Weiss, Robert, Dr., 68723 Schwetzingen (DE)
(74) Vertreter: Westphal, Mussgnug & Partner Patentanwälte mbB

(56) Entgegenhaltungen:
- FR-A- 732 196
- FR-A- 924 404
- US-A- 3 069 929

## Beschreibung

Die Erfindung betrifft eine Mitnehmereinheit zur beispielsweisen Verwendung in Lamellenkupplungssystemen gemäß dem Oberbegriff des Anspruchs 1.

Die aus dem Stand der Technik bekannten Mitnehmereinheiten bestehen im wesentlichen aus einer Mitnehmerscheibe und einem Kupplungskorb. Die Mitnehmerscheibe weist hierbei eine in Umfangrichtung verlaufende Außenverzahnung auf Siehe FR 924404 , US 3069929 und FR 732196 als Stand der Technik. Am Kupplungskorb ist eine zur Außenverzahnung der Mitnehmerscheibe zumindest abschnittsweise form- und funktionskomplementäre Innenverzahnung vorgesehen. Zur Montage der Mitnehmereinheit wird die Mitnehmerscheibe mit der Außenverzahnung auf Presspassung in die Innenverzahnung des Kupplungskorbs eingesetzt.

Die Mitnehmerscheibe und der Kupplungskorb weisen im eingesetzten Zustand eine gemeinsame Drehachse auf. Insbesondere bei erhöhten Drehzahlen der Mitnehmereinheit findet eine im wesentlichen radiale Aufweitung des Kupplungskorbs in Bezug zur Mitnehmerscheibe statt. Dies hat zur Folge, dass sich bei hohen Drehzahlen das Flankenspiel zwischen der Außenverzahnung des Kupplungskorbs und der Innenverzahnung der Mitnehmerscheibe vergrößert. Dadurch können störende Klappergeräusche entstehen, insbesondere, wenn das eingeleitete Drehmoment starken Schwingungen unterliegt.

Ausgehend von diesem Stand der Technik besteht die Aufgabe der vorliegenden Erfindung darin, eine Mitnehmereinheit zu schaffen, bei der derartige Klappergeräusche weitestgehend reduziert sind.

Diese Aufgabe wird durch eine Mitnehmereinheit nach der Lehre des Patentanspruchs 1 gelöst.

Vorteilhafte Ausführungen und Weiterbildungen der Erfindung sind Gegenstand der Unteransprüche.

Ausgehend von einer gattungsgemäßen Mitnehmereinheit besteht der wesentliche Gedanke der Erfindung darin, sich die, unter Einfluss der Fliehkraft, auftretende ungleiche radiale Aufweitung von Kupplungskorb und Mitnehmerscheibe dahingehend zu Nutze zu machen, dass sich die Außenverzahnung und die Innenverzahnung zumindest abschnittsweise hintergreifen. Aufgrund der radial und / oder tangential wirkenden Hintergreifung werden unter Fliehkrafteinfluss zumindest Bereiche der Innenverzahnung gegen entsprechende in Wirkeingriff befindliche Bereiche der Außenverzahnung gepresst. Dadurch wird zwischen Außen- und Innenverzahnung eine spielfreie Presspassung hergestellt. Dies hat zur Folge, dass die aus dem Stand der Technik bekannte Vergrößerung des Spiels zwischen Außen- und Innenverzahnung erfindungsgemäß unter Einfluss der Zentrifugalkraft aufgehoben wird.

In welcher Art und Weise die Hintergreifung zwischen Außen-und Innenverzahnung bewerkstelligt wird, ist für das Prinzip der Erfindung ohne wesentlichen Belang. So ist es beispielsweise möglich, dass zumindest ein Zahn der Innenverzahnung zumindest einen Zahn oder Zahnzwischenraum der Außenverzahnung hintergreift. Es ist auch möglich, dass zumindest ein Zahn der Außenverzahnung zumindest einen Zahn oder Zahnzwischenraum der Innenverzahnung hintergreift.

Nach einem bevorzugten Ausführungsbeispiel wird die äußere Mantelfläche des Gehäuses des Kupplungskorbs zumindest abschnittweise von Bereichen der Außenverzahnung der Mitnehmerscheibe hintergriffen. Dies hat den besonderen Vorteil, dass unter Einwirkung der Zentrifugalkraft nicht nur eine spielfreie Verbindung zwischen Außen- und Innenverzahnung hergestellt wird, sondern dass auch die Aufweitung und Deformation des gesamten Kupplungskorbs weitestgehend reduziert wird, da der Kupplungskorb auf seiner äußeren Mantelfläche durch die Mitnehmerscheibe in Folge der Hintergreifung der Außenverzahnung zumindest abschnittsweise abgestützt wird.

Durch die erfindungsgemäße Reduzierung der Fliehkraftspannungen im Kupplungskorb ist es möglich, den Kupplungskorb fertigungstechnisch einfach und damit kostengünstig, beispielsweise mit Hilfe eines Tiefzieh- oder Umformverfahrens, herzustellen. Daraus resultiert, dass das Gehäuse des Kupplungskorbs zumindest im Bereich des Innenverzahnung als Profilbauteil ausgebildet ist.

Nach einer bevorzugten Ausgestaltung der Erfindung ist im Kupplungskorb zumindest eine schlitzartige Ausnehmung erster Art und / oder zumindest eine schlitzartige Ausnehmung zweiter Art vorgesehen. Die schlitzartigen Ausnehmungen erster und / oder zweiter Art können sowohl im Bereich eines Zahns oder eines Zahnzwischenraums vorgesehen sein. Erfindungsgemäß wird die schlitzartige Ausnehmung erster Art im Wesentlichen von zumindest einem Bereich der Außenverzahnung der Mitnehmerscheibe durchgriffen. Mögliche Ausgestaltungen dieser Ausführungsform bestehen darin, dass entweder zumindest ein Zahn der Innenverzahnung mit einer schlitzartigen Ausnehmung versehen ist, welche von zumindest einem Zahn der Mitnehmerscheibe durchgriffen wird oder aber, dass zumindest ein Zahnzwischenraum der Innenverzahnung des Kupplungskorbs mit einer Ausnehmung versehen ist, durch welche ein Zahn der Außenverzahnung der Mitnehmerscheibe hindurch greift.

Durch die schlitzartige Ausnehmung zweiter Art wird bewirkt, dass der Kupplungskorb federelastisch deformierbar ist.

Nach einem besonders bevorzugten Ausführungsbeispiel verläuft die zumindest eine schlitzartige Ausnehmung erster bzw. zweiter Art bis zu einem axialen Ende des Kupplungskorbs. Dies hat den Vorteil, dass die Mitnehmerscheibe und der Kupplungskorb einfacher montierbar sind und der Kupplungskorb eine höhere Federelastizität aufweist.

Nach einem weiteren Ausführungsbeispiel ist es insbesondere vorteilhaft, wenn die Außenverzahnung bzw. die Innenverzahnung in Umfangrichtung in Bezug zur Innenverzahnung bzw. Außenverzahnung zumindest bereichsweise Übermaß aufweist. So bewirkt beispielsweise eine in Übermaß ausgelegte Außenverzahnung der Mitnehmerscheibe in Verbindung mit zumindest einer schlitzartigen Ausnehmung zweiter Art, welche sich beispielsweise bis zu einem axialen Ende des Kupplungskorbs erstreckt, eine in radialer und / oder Umfangsrichtung wirkende Vorspannung des Kupplungskorbs an der Mitnehmerscheibe. Dies ist insbesondere dann von Vorteil, wenn auch Klapper- oder Brummgeräusche bei niedrigen Drehzahlen, bei denen der Fliegkrafteinfluss vernachlässigbar klein ist und daher nicht zum tragen kommt, reduziert werden soll.

Nach einem weiteren, besonders bevorzugten Ausführungsbeispiel bildet zumindest eine Flanke der Außenverzahnung mit der dazu form- und funktionskomplementären Flanke der Innenverzahnung zumindest abschnittsweise in Bezug zur radialen Richtung von Mitnehmerscheibe und Kupplungskorb eine schräge Gleitfläche. Durch den schrägen Flankenverlauf wird erreicht, dass entweder bei hohen oder bei niedrigen Drehzahlen der Mitnehmereinheit eine im Wesentlichen spielfreie Passung zwischen Außen- und Innenverzahnung entsteht. Eine besondere Ausgestaltung besteht darin, dass beide Flanken zumindest eines Zahns der Außen- bzw. Innenverzahnung zumindest abschnittsweise in radialer Richtung konisch verlaufen.

Eine weitere Ausführungsform der Verbindung besteht darin, dass an zumindest einer Flanke der Außen- bzw. der Innenverzahnung eine Einkerbung und / oder ein Vorsprung vorgesehen ist, in welche ein Zahnkopf bzw. ein Zahnfuß der Innenverzahnung bzw. der Außenverzahnung zumindest bereichsweise eingreifbar ist. Mit dieser Ausgestaltung ist es beispielsweise möglich eine spielfreie Verbindung von Mitnehmerscheibe und Kupplungskorb bei niedrigen Drehzahlen und bei hohen Drehzahlen herzustellen. So ist es beispielsweise, aber nicht ausschließlich möglich, dass die Spielfreiheit bei niedrigen Drehzahlen durch die Vorspannung aufgrund des konischen Flankenverlauf bewirkt wird, und des weiteren bei hohen Drehzahlen die Spielfreiheit aufgrund des abschnittweisen Hintergreifens von Außen- und Innenverzahnung im Bereich der Einkerbung bzw. des Vorsprungs und der Zahnkopf- bzw. Zahnfußsegmente bewerkstelligt wird.

Im Folgenden wird die Erfindung anhand von Zeichnungen, die verschiedene Ausführungsbeispiele darstellen, näher erläutert. Es zeigen:
Fig. 1 einen Ausschnitt einer ersten erfindungsgemäßen Variante der Mitnehmereinheit in Draufsicht.
Fig. 2 einen Ausschnitt einer weiteren Ausführungsform der Erfindung in Draufsicht.
Fig. 3 eine perspektivische Darstellung der zweiten Ausführungsform gem. Fig. 2 von Mitnehmerscheibe und Kupplungskorb in unmontiertem Zustand.

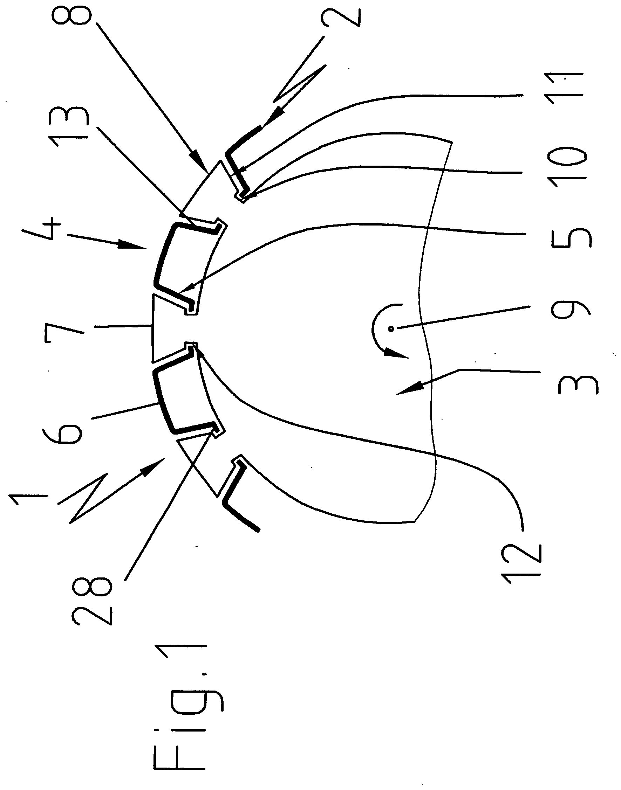

Die Figur 1 zeigt eine erfindungsgemäße Mitnehmereinheit 1 zur beispielsweisen Verwendung in Lamellenkupplungssystemen, bestehend aus einem Kupplungskorb 2 sowie aus einer Mitnehmerscheibe 3. Die im Wesentlichen rotationssymmetrische Mitnehmerscheibe 3 ist im vorliegenden Ausführungsbeispiel als Blechumformteil ausgebildet. Der im wesentlichen rotationssymmetrische Kupplungskorb 2 wird ebenfalls durch einen Blechumformprozess, wie beispielsweise Tiefziehen, hergestellt. Die in Umfangrichtung des Gehäuses des Kupplungskorbs 2 vorgesehene Innenverzahnung 4 wird durch zueinander im wesentlichen gleich beabstandete Zähne 5 gebildet. Der Abstand der Zähne 5 wird durch die Zahnzwischenräume 6 festgelegt.

Die Mitnehmerscheibe 3 weist Zähne 7 auf, welche in Umfangrichtung in im Wesentlichen gleichen Abstand zueinander angeordnet sind. Die Zähne 7 bilden die Außenverzahnung 8 der Mitnehmerscheibe 3. Die Außenverzahnung 8 der Mitnehmerscheibe 3 und die Innenverzahnung 4 des Kupplungskorbs 2 sind im Bereich der einzelnen Zähne 5,7 zueinander form- und funktionskomplementär ausgebildet. In montiertem Zustand der Mitnehmereinheit 1 werden die Außenverzahnung 8 und die Innenverzahnung 4 zueinander in Eingriff gebracht. Der Kupplungskorb 2 und die Mitnehmerscheibe 3 weisen im montierten Zustand ein gemeinsames Drehzentrum 9 auf.

Erfindungsgemäß wird die Innenverzahnung 4 des Kupplungskorbs 2 zumindest abschnittsweise von der Außenverzahnung 8 der Mitnehmerscheibe 3 hintergriffen. Im vorliegenden Ausführungsbeispiel weist der Kupplungskorb 2 im Bereich jedes Zahns 5 eine schlitzartige Ausnehmung erster Art 10 auf, wobei jede schlitzartige Ausnehmung erster Art 10 jeweils von einem Zahn 7 der Außenverzahnung 8 der Mitnehmerscheibe 3 in der Art durchgriffen wird, dass eine zumindest abschnittsweise Hintergreifung von Außenverzahnung 8 und Innenverzahnung 4 hergestellt wird. Dabei weist jeder Zahn 7 der Außenverzahnung 8 der Mitnehmerscheibe 3 zwei zueinander konisch verlaufende Flanken 11 auf. Jeder Zahn 7 ist dabei in Richtung des Drehzentrums 9 verjüngt. Des weiteren zeigt jede Flanke 11 eine Einkerbung 12 die durch ein Zahnkopfsegment 28 der Innenverzahnung 4 des Kupplungskorbs 2 hintergriffen wird. Das Zahnkopfsegment 28 wird im vorliegenden Ausführungsbeispiel im Wesentlichen durch den Randbereich der schlitzartigen Ausnehmung 10 der Innenverzahnung 4 des Kupplungskorbs 2 gebildet.

Bei einer Rotationsbewegung mit hoher Drehzahl um das Drehzentrum 9 findet bei einer Mitnehmereinheit 1 gemäß dem Stand der Technik eine Aufweitung des Kupplungskorbs 2 in Bezug zur Mitnehmerscheibe 3 statt. Erfindungsgemäß wird diese Aufweitung unterbunden, in dem zum einen die Zahnkopfsegmente 28 die an den Flanken 11 der Zähne 7 der Außenverzahnung 8 vorgesehenen Auskerbungen 12 hintergreifen und des weiteren durch den konischen Verlauf der beiden Flanken 11 jedes Zahns 7 und aufgrund des konischen Verlaufs der Flanken 13 der Innenverzahnung 4 eine im Wesentlichen nach außen gerichtete radiale Verschiebung der Flanken 13 der Innenverzahnung 4 weitgehend unterbunden wird. Die aus dem Stand der Technik bekannte radiale Aufweitung des Kupplungskorbs 2 tritt also nicht mehr auf.

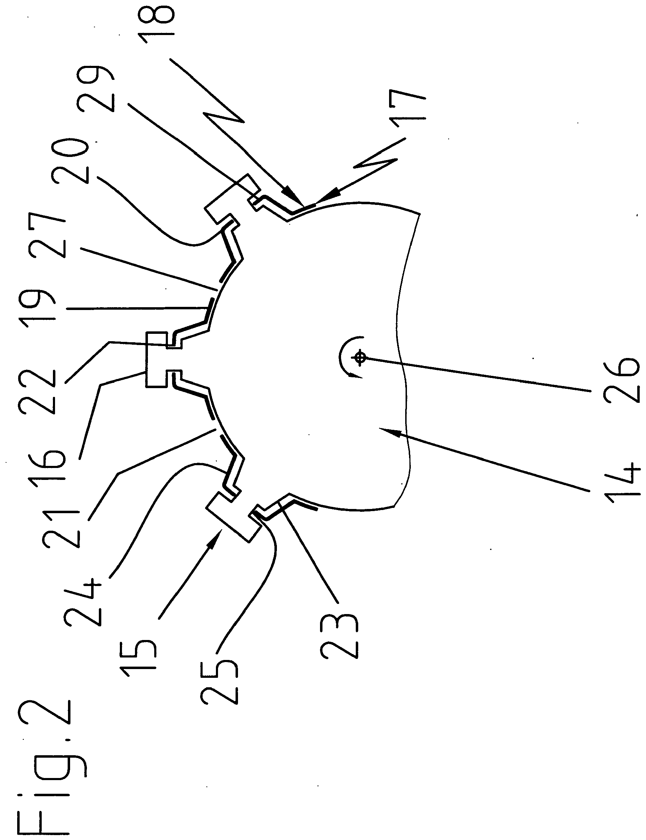

Die Figur 2 zeigt eine weitere erfindungsgemäße Mitnehmerscheibe 14 mit einer Außenverzahnung 15, welche durch zueinander gleich beabstandete Zähne 16 gebildet wird. Der Abstand zweier benachbarter Zähne 16 wird durch den Zahnzwischenraum 27 festgelegt. Der Kupplungskorb 17 weist eine in Umfangrichtung verlaufende Innenverzahnung 18 auf. Die Innenverzahnung 18 wird durch zueinander im Wesentlichen gleich beabstandete Zähne 19 gebildet. Der Abstand zweier benachbarter Zähne 19 wird durch den Zahnzwischenraum 20 festgelegt. Im vorliegenden Ausführungsbeispiel sind sowohl im Bereich jedes Zahns 19 wie auch im Bereich jedes Zahnzwischenraums 20 jeweils eine schlitzartige Ausnehmung zweiter Art 21 wie auch eine schlitzartige Ausnehmung erster Art 22 vorgesehen. Jede schlitzartige Ausnehmung erster Art 22 wird von jeweils einem Zahn 16 der Mitnehmerscheibe 14 durchgriffen.

Im vorliegenden Ausführungsbeispiel sind die Zähne 16 der Mitnehmerscheibe 14 in Bezug zur Innenverzahnung 18 des Kupplungskorbs 17 in Umfangrichtung in Übermaß gefertigt. Durch die schlitzartigen Ausnehmungen zweiter Art 21 im Bereich der Zähne 19 des Kupplungskorbs 17 wird erreicht, dass der Kupplungskorb 17 selbst elastisch in Bezug zur Mitnehmerscheibe 14 vorgespannt ist. Beide Flanken 23 jedes Zahns 16 der Mitnehmerscheibe 14 verlaufen in radialer Richtung betrachtet im Wesentlichen konisch. Im Bereich jeder Flanke 23 jedes Zahns 16 der Mitnehmerscheibe 14 ist eine Einkerbung 25 eingearbeitet die von jeweils einem Zahnfußsegment 29 hintergriffen wird. Das Zahnfußsegment 29 wird durch den Randbereich der schlitzartigen Ausnehmung erster Art 22 des Zahnzwischenraums 20 gebildet.

Bei niedrigen Drehzahlen ist der Kupplungskorb 17 aufgrund des sich in radialer Richtung nach außen verjüngenden konischen Verlaufs der Flanken 23 der Zähne 16 der Mitnehmerscheibe 14 und aufgrund der Tatsache, dass die Außenverzahnung 15 in Bezug zur Innenverzahnung 18 in Umlaufrichtung in Übermaß gefertigt ist, im Wesentlichen spielfrei und relativ zur Mitnehmerscheibe 14 federelastisch vorgespannt. Bei hohen Rotationsgeschwindigkeiten um das Drehzentrum 26 wird die Innenverzahnung 18 des Kupplungskorbs 17 in Folge der Wirkung der Zentrifugalkraft mit den Zahnfußsegmenten 29 in die Einkerbungen 25 der Zähne 16 der Außenverzahnung 15 gepresst. Es entsteht eine im Wesentlichen spielfreie Presspassung zwischen der Außenverzahnung 15 der Mitnehmerscheibe 14 und der Innenverzahnung 18 des Kupplungskorbs 17.

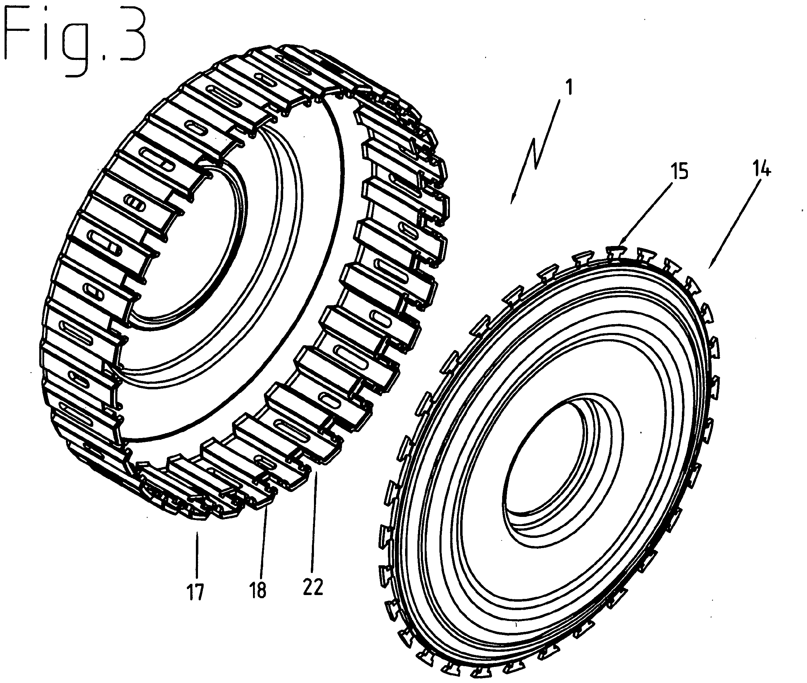

Die Fig. 3 zeigt ferner in perspektivischer und unvollständiger Darstellung, die erfindungsgemäße Ausführungsform gemäß Fig. 2 in unmontiertem Zustand. Man erkennt die Mitnehmerscheibe 14 mit der Außenverzahnung 15 sowie den Kupplungskorb 17 mit der Innenverzahnung 18. Des weiteren sind die schlitzartigen Ausnehmungen erster Art 22 im Bereich der Innenverzahnung, die sich bis zu einem axialen Ende des Kupplungskorbs erstrecken, dargestellt. Nicht dargestellt sind beispielsweise die schlitzartigen Ausnehmungen zweiter Art 21.

### Bezugszeichenliste

- 1: Mitnehmereinheit
- 2: Kupplungskorb
- 3: Mitnehmerscheibe
- 4: Innenverzahnung
- 5: Zahn des Kupplungskorbs
- 6: Zahnzwischenraums des Kupplungskorbs
- 7: Zahn der Mitnehmerscheibe
- 8: Außenverzahnung
- 9: Drehzentrum
- 10: Schlitzartige Ausnehmung erster Art
- 11: Flanke des Zahns der Mitnehmerscheibe
- 12: Einkerbung/Vorsprung
- 13: Flanke des Zahns des Kupplungskorbes
- 14: Mitnehmerscheibe
- 15: Außenverzahnung
- 16: Zahn der Mitnehmerscheibe
- 17: Kupplungskorb
- 18: Innenverzahnung des Kupplungskorbs
- 19: Zahn des Kupplungskorbs
- 20: Zahnzwischenraum des Kupplungskorbs
- 21: schlitzartige Ausnehmung zweiter Art
- 22: schlitzartige Ausnehmung erster Art
- 23: Flanke des Zahns der Mitnehmerscheibe
- 24: Flanke des Kupplungskorbs
- 25: Einkerbung/Vorsprung
- 26: Drehzentrum
- 27: Zahnzwischenraum der Mitnehmerscheibe
- 28: Zahnkopfsegment
- 29: Zahnfußsegment

## Patentansprüche

1. Mitnehmereinheit (1), insbesondere zur Verwendung in Lamellenkupplungssytemen, bestehend aus Mitnehmerscheibe (3,14) und Kupplungskorb (2,17), wobei auf der Mitnehmerscheibe (3,14) eine Außenverzahnung (8,15) vorgesehen ist, und wobei das Gehäuse des Kupplungskorbs (2,17) mit einer zur Außenverzahnung (8,15) der Mitnehmerscheibe (3,14) zumindest abschnittsweise form- und funktionskomplementären Innenverzahnung (4,18) versehen ist, und wobei die Mitnehmerscheibe (3,14) in den Kupplungskorb (2,17) einsetzbar ist,
**dadurch gekennzeichnet , dass** sich in eingesetztem Zustand die Innenverzahnung (4,18) und die Außenverzahnung (8,15) zumindest abschnittsweise hintergreifen.

2. Mitnehmereinheit nach Anspruch 1,
**dadurch gekennzeichnet , dass** die Hintergreifung radial wirkend und / oder tangential wirkend ist.

3. Mitnehmereinheit nach Anspruch 1 oder 2,
**dadurch gekennzeichnet , dass** die äußere Mantelfläche des Gehäuses des Kupplungskorbs (2,17) zumindest abschnittsweise von Bereichen der Außenverzahnung (8,15) der Mitnehmerscheibe (3,14) hintergriffen ist.

4. Mitnehmereinheit nach einem der Ansprüche 1 bis 3,
**dadurch gekennzeichnet , dass** das Gehäuse des Kupplungskorbs (2,17) zumindest im Bereich der Innenverzahnung (4,18) als Profilbauteil ausgebildet ist.

5. Mitnehmereinheit nach einem der Ansprüche 1 bis 4,
**dadurch gekennzeichnet , dass** im Gehäuse des Kupplungskorbs (2,17) zumindest eine schlitzartige Ausnehmung erster Art (10,22) im Bereich eines Zahns (5,19) oder im Bereich eines Zahnzwischenraums (6,20) und / oder zumindest eine schlitzartige Ausnehmung zweiter Art (21) im Bereich eines Zahns (5,19) oder im Bereich eines Zahnzwischenraums (6,20) vorgesehen ist.

6. Mitnehmereinheit nach einem der Ansprüche 1 bis 5,
**dadurch gekennzeichnet , dass** die zumindest eine schlitzartige Ausnehmung erster Art (10,22) bzw. schlitzartige Ausnehmung zweiter Art (21) bis zu einem axialen Ende des Kupplungskorbs (2,17) verläuft.

7. Mitnehmereinheit nach einem der Ansprüche 1 bis 6,
**dadurch gekennzeichnet , dass** die schlitzartige Ausnehmung erster Art (10,22) von zumindest einem Bereich der Außenverzahnung (8,15) der Mitnehmerscheibe (3,14) durchgreifbar ist.

8. Mitnehmereinheit nach einem der Ansprüche 1 bis 7,
**dadurch gekennzeichnet , dass** die zumindest eine schlitzartige Ausnehmung erster Art (10,22) von zumindest einem Zahn (7,16) der Außenverzahnung (8,15) durchgreifbar ist.

9. Mitnehmereinheit nach einem der Ansprüche 1 bis 8,
**dadurch gekennzeichnet , dass** die zumindest eine schlitzartige Ausnehmung erster Art (10,22) bzw. schlitzartige Ausnehmung zweiter Art (21) im wesentlichen in axialer Richtung des Kupplungskorbs (2,17) verläuft.

10. Mitnehmereinheit nach einem der Ansprüche 1 bis 9,
**dadurch gekennzeichnet , dass** die Außenverzahnung (8,15) / Innenverzahnung (4,18) in Umfangrichtung in Bezug zur Innenverzahnung (4,18) / Außenverzahnung (8,15) zumindest bereichsweise Übermaß aufweist.

11. Mitnehmereinheit nach Anspruche 10,
**dadurch gekennzeichnet , dass** die Außenverzahnung (8,15) federelastisch unter Vorspannung in die Innenverzahnung (4,18) einsetzbar ist.

12. Mitnehmereinheit nach einem der Ansprüche 1 bis 11,
**dadurch gekennzeichnet , dass** zumindest eine Flanke (11,23) der Außenverzahnung (8,15) mit der dazu form- und funktionskomplementären Flanke (13,24) der Innenverzahnung (4,18) zumindest abschnittsweise im Bezug zur radialen Richtung eine schräge Gleitfläche bildet.

13. Mitnehmereinheit nach einem der Ansprüche 1 bis 12,
**dadurch gekennzeichnet , dass** beide Flanken (11,23,13,24) zumindest eines Zahns (7,16,5,19) der Außenverzahnung (8,15) bzw. der Innenverzahnung (4,18) zumindest abschnittsweise in radialer Richtung konisch verlaufen.

14. Mitnehmereinheit nach einem der Ansprüche 1 bis 13,
**dadurch gekennzeichnet , dass** an zumindest einer Flanke (11,23,13,24) der Außenverzahnung (8,15) / Innenverzahnung (4,18) eine Einkerbung (12,25) und / oder ein Vorsprung (12,25) vorgesehen ist, in welche ein Zahnkopfsegment (28) und / oder ein Zahnfußsegment (29) der Innenverzahnung (4,18) / Außenverzahnung (8,15) eingreifbar ist.

## Claims

1. Driver unit (1), in particular for use in multiple disc clutches, consisting of a driver plate (3, 14) and a clutch basket (2, 17), an external toothing system (8, 15) being provided on the driver plate (3, 14), and the housing of the clutch basket (2, 17) being provided with an internal toothing system (4, 18) which is complementary at least in sections in terms of shape and function with respect to the external toothing system (8, 15) of the driver plate (3, 14), and it being possible for the driver plate (3, 14) to be inserted into the clutch basket (2, 17), **characterized in that**, in the inserted state, the internal toothing system (4, 18) and the external toothing system (8, 15) engage behind one another at least in sections.

2. Driver unit according to Claim 1, **characterized in that** the engagement behind one another is active radially and/or tangentially.

3. Driver unit according to Claim 1 or 2, **characterized in that** the outer circumferential face of the housing of the clutch basket (2, 17) is engaged behind at least in sections by regions of the external toothing system (8, 15) of the driver plate (3, 14).

4. Driver unit according to one of Claims 1 to 3, **characterized in that** the housing of the clutch basket (2, 17) is configured as a profiled component at least in the region of the internal toothing system (4, 18).

5. Driver unit according to one of Claims 1 to 4, **characterized in that**, in the housing of the clutch basket (2, 17), at least one slot-like recess of a first type (10, 22) is provided in the region of a tooth (5, 19) or in the region of a tooth intermediate space (6, 20), and/or at least one slot-like recess of a second type (21) is provided in the region of a tooth (5, 19) or in the region of a tooth intermediate space (6, 20).

6. Driver unit according to one of Claims 1 to 5, **characterized in that** the at least one slot-like recess of a first type (10, 22) or slot-like recess of a second type (21) runs as far as one axial end of the clutch basket (2, 17).

7. Driver unit according to one of Claims 1 to 6, **characterized in that** the slot-like recess of a first type (10, 22) can be engaged through by at least one region of the external toothing system (8, 15) of the driver plate (3, 14).

8. Driver unit according to one of Claims 1 to 7, **characterized in that** the at least one slot-like recess of a first type (10, 22) can be engaged through by at least one tooth (7, 16) of the external toothing system (8, 15) .

9. Driver unit according to one of Claims 1 to 8, **characterized in that** the at least one slot-like recess of a first type (10, 22) or slot-like recess of a second type (21) runs substantially in the axial direction of the clutch basket (2, 17).

10. Driver unit according to one of Claims 1 to 9, **characterized in that** the external toothing system (8, 15)/internal toothing system (4, 18) has an oversize at least in regions in the circumferential direction with respect to the internal toothing system (4, 18)/external toothing system (8, 15).

11. Driver unit according to Claim 10, **characterized in that** the external toothing system (8, 15) can be inserted into the internal toothing system (4, 18) resiliently under prestress.

12. Driver unit according to one of Claims 1 to 11, **characterized in that** at least one flank (11, 23) of the external toothing system (8, 15) forms an oblique sliding face at least in sections in relation to the radial direction with that flank (13, 24) of the internal toothing system (4, 18) which is complementary in terms of shape and function with respect to said flank (11, 23) .

13. Driver unit according to one of Claims 1 to 12, **characterized in that** the two flanks (11, 23, 13, 24) of at least one tooth (7, 16, 5, 19) of the external toothing system (8, 15) and the internal toothing system (4, 18) run conically in the radial direction at least in sections.

14. Driver unit according to one of Claims 1 to 13, **characterized in that** a notch (12, 25) and/or a projection (12, 25) are/is provided on at least one flank (11, 23, 13, 24) of the external toothing system (8, 15)/internal toothing system (4, 18), into which notch (12, 25) and/or projection (12, 25) a tooth tip segment (28) and/or a tooth root segment (29) of the internal toothing system (4, 18)/external toothing system (8, 15) can engage.

## Revendications

1. Unité à élément d'entraînement (1), notamment destinée à être utilisée dans des systèmes d'embrayage à disques multiples, composée d'un disque d'entraînement (3, 14) et d'une cloche d'embrayage (2, 17), une denture externe (8, 15) se trouvant sur le disque d'entraînement (3, 14) et le boîtier de la cloche d'embrayage (2, 17) étant pourvu d'une denture interne (4, 18) complémentaire en forme et en fonction au moins dans certaines portions à la denture externe (8, 15) du disque d'entraînement (3, 14), et le disque d'entraînement (3, 14) pouvant être introduit dans la cloche d'embrayage (2, 17), **caractérisée en ce que** dans l'état introduit, la denture interne (4, 18) et la denture externe (8, 15) viennent en prise par l'arrière au moins dans certaines portions.

2. Unité à élément d'entraînement selon la revendication 1, **caractérisée en ce que** la prise par l'arrière est à action radiale et/ou à action tangentielle.

3. Unité à élément d'entraînement selon la revendication 1 ou 2, **caractérisée en ce que** l'enveloppe extérieure du boîtier de la cloche d'embrayage (2, 17) est mise en prise arrière au moins dans certaines portions avec des zones de la denture externe (8, 15) du disque d'entraînement (3, 14).

4. Unité à élément d'entraînement selon l'une des revendications 1 à 3, **caractérisée en ce que** le boîtier de la cloche d'embrayage (2, 17) est réalisé sous la forme d'un élément structural profilé au moins dans la zone de la denture interne (4, 18).

5. Unité à élément d'entraînement selon l'une des revendications 1 à 4, **caractérisée en ce que** dans le boîtier de la cloche d'embrayage (2, 17), au moins un creux de type fente d'un premier type (10, 22) se trouve dans la zone d'une dent (5, 19) ou dans la zone d'un espace entredent (6, 20) et/ou au moins un creux de type fente d'un deuxième type (21) dans la zone d'une dent (5, 19) ou dans la zone d'un espace entredent (6, 20).

6. Unité à élément d'entraînement selon l'une des revendications 1 à 5, **caractérisée en ce que** l'au moins un creux de type fente du premier type (10, 22) ou le creux de type fente du deuxième type (21) s'étend jusqu'à une extrémité axiale de la cloche d'embrayage (2, 17).

7. Unité à élément d'entraînement selon l'une des revendications 1 à 6, **caractérisée en ce que** le creux de type fente du premier type (10, 22) peut être pénétré par au moins une zone de la denture externe (8, 15) du disque d'entraînement (3, 14) .

8. Unité à élément d'entraînement selon l'une des revendications 1 à 7, **caractérisée en ce que** l'au moins un creux de type fente du premier type (10, 22) peut être pénétré par au moins une dent (7, 16) de la denture externe (8, 15).

9. Unité à élément d'entraînement selon l'une des revendications 1 à 8, **caractérisée en ce que** l'au moins un creux de type fente du premier type (10, 22) ou le creux de type fente du deuxième type (21) s'étend sensiblement dans la direction axiale de la cloche d'embrayage (2, 17) .

10. Unité à élément d'entraînement selon l'une des revendications 1 à 9, **caractérisée en ce que** la denture externe (8, 15) / la denture interne (4, 18) possède au moins dans certaines zones une surcote dans la direction périphérique, en référence à la denture interne (4, 18) / la denture externe (8, 15).

11. Unité à élément d'entraînement selon la revendication 10, **caractérisée en ce que** la denture externe (8, 15) peut être introduite dans la denture interne (4, 18) sous précontrainte avec élasticité de ressort.

12. Unité à élément d'entraînement selon l'une des revendications 1 à 11, **caractérisée en ce qu'**au moins un flanc (11, 23) de la denture externe (8, 15) forme avec le flanc (13, 24) complémentaire en forme et en fonction de la denture interne (4, 18), au moins dans certaines portions, une surface de glissement oblique en référence à la direction radiale.

13. Unité à élément d'entraînement selon l'une des revendications 1 à 12, **caractérisée en ce que** les flancs (11, 23, 13, 24) d'au moins une dent (7, 16, 5, 19) de la denture externe (8, 15) ou de la denture interne (4, 18) suivent au moins dans certaines portions un tracé conique dans la direction radiale.

14. Unité à élément d'entraînement selon l'une des revendications 1 à 13, **caractérisée en ce qu'**une rainure (12, 25) et/ou une partie saillante (12, 25) se trouve sur au moins un flanc (11, 23, 13, 24) de la denture externe (8, 15) / de la denture interne (4, 18), dans laquelle peut pénétrer un segment de tête de dent (28) et/ou un segment de pied de dent (29) de la denture interne (4, 18) / de la denture externe (8, 15).
